# EUROPÄISCHE PATENTANMELDUNG

(11) **EP 0 887 097 A1**
(43) Veröffentlichungstag der Anmeldung: **30.12.1998**
(21) Anmeldenummer: 98111120.6
(22) Anmeldetag: 17.06.1998
(51) Int. Cl.: B01D 19/04

(54) **Entschäumerpulver**

(30) Priorität: 24.06.1997 DE 19726777
(71) Anmelder: Hüls Silicone Gesellschaft mit beschränkter Haftung, D-01610 Nünchritz (DE)
(72) Erfinder: Spitzner, Hartmut, Dr. rer. nat., 01612 Nünchritz (DE); Rautschek, Holger, Dr. rer. nat., 01612 Nünchritz (DE); Wolf, Christine, 01619 Bobersen (DE)
(74) Vertreter: Zöllner, Gudrun

(57) **Zusammenfassung**

Die Erfindung betrifft Entschäumerpulver, welche neben einer Entschäumerformulierung, Füllstoff und pulverförmigem Trägermaterial mindestens eine Verbindung der allgemeinen Formel R¹-Aₐ-B_{b}-R¹ (I) enthalten.

## Beschreibung

Die Erfindung betrifft Entschäumerpulver, welche insbesondere in Wasch- und Reinigungsmitteln Verwendung finden.

In vielen flüssigen, insbesondere wäßrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, wie beispielsweise beim Begasen von Abwässern, beim intensiven Rühren von Flüssigkeiten, bei Destillations-, Wasch- oder Farbeprozessen oder bei Abfüllvorgängen. Die Bekämpfung dieses Schaumes kann aufmechanischem Wege oder bekanntermaßen durch den Zusatz von Entschäumern erfolgen.

Bei der Verwendung von pulverförmigen Waschmitteln ist es vorteilhaft, wenn die sonst ölartigen Entschäumer ebenfalls in Pulverform vorliegen. So ist es möglich, den Entschäumer an feste Träger, wie z. B. an Aluminiumoxid (DE 26 156 88), Methylkieselsäure (BE 854 468) oder auch an Baumwolle, Holzmehl (EP 593 544) oder anderen cellulosehaltigen Materialien (EP 336 710), zu adsorbieren. Bevorzugt werden hierbei Produkte, bei denen die Trägermaterialien den Waschprozeß nicht behindern oder selbst Waschmittelbestandteile sind, wie z.B. Natriumpolyphosphat (DE 22 32 262), Natriumperborat (DE 24 02 955), Stärke bzw. Stärkederivate (EP 684303, US 5,540,856) und Alumosilikate (WO 96/34671). Die dabei erhaltenen Entschäumerpulver verlieren jedoch insbesondere in pulverförmigen Tensidformulierungen, aber auch in pulverförmigen agrochemischen Formulierungen, bei Lagerung schnell an Wirksamkeit.

Ein solcher Verlust an Wirksamkeit tritt ebenfalls bereits durch den Kontakt zu schwach alkalischen Verbindungen ein, wie sie als zusätzliche Antacidika in Antiflatulenzpräparaten verwendet werden (J. Alfred Rider, Current Therapeutic Research 1992, 52, 681).

Durch Zusatz weiterer organischer Komponenten, wie z .B. Stearylalkohol (EP 517 298), Maltodextrinen (EP 391 590), festen Paraffinen (EP 23 68 93), Wachsen (EP 071 481), Polyvinylalkohol (EP 187 266), Celluloseethern (DE 34 36 194) oder Polycarboxylaten (EP 636 684 und EP 636 685), aber auch durch Verwendung von Trägermaterialien mit einer definierten, speziell ausgewählten Porengröße (EP 342 985) oder mittels speziell und aufwendig gestalteter Herstellungsverfahren (u. a. DE 41 08 286, DE 41 17 032, EP 484 081) wurde versucht, die Qualität der Produkte zu verbessern.

Der Nachteil der beschriebenen Lösungen besteht in den zum Teil erheblichen Mengen der benötigten zusätzlichen, organischen Komponenten, die in den meisten Fällen selbst keine waschaktiven Substanzen sind und somit eine überflüssige Belastung darstellen. Die unter Zusatz großer Mengen organischer Komponenten als zusätzlichen Schutz für die Siliconentschäumer hergestellten Entschäumerpulver weisen oftmals eine schlechte Wirksamkeit aufgrund der verzögerten Freisetzung des Entschäumeröls in die Waschflotte auf.

Die Aufgabe der Erfindung war daher, Entschäumerpulver vorzuschlagen, welche neben Entschäumerformulierung und Trägermaterial nur geringe Mengen zusätzlicher Bestandteile enthalten und dennoch über eine hervorragende Lagerstabilität in tensidhaltigen Formulierungen verfügen.

Gegenstand der Erfindung sind Entschäumerpulver, welche
(a) 100 Gew.-Teile einer Entschäumerformulierung, bestehend aus mindestens einem in Wasser unlöslichem Entschäumeröl und mindestens einem Füllstoff,
(b) 50 bis 5000 Gew.-Teile mindestens eines pulverförmigen Trägermaterials sowie
(c) 1 bis 150 Gew.-Teile mindestens einer Verbindung der allgemeinen Formel

   R¹-A₃-B_{b}-R¹ (I)

   , worin R¹ unabhängig voneinander gleiche oder verschiedene, kettenabbrechende Gruppen mit 1 bis 30 Kohlenstoffatomen bedeutet und a größer/gleich 1 ist und b größer/gleich 0 ist, wobei R¹ direkt und/oder über Polyalkylenglycolketten an A und/oder B gebunden ist,
   A einer Gruppe der allgemeinen Formel

      -CONH-R²-NHCO-[OCₙH₂ₙ]ₘ-O- (II)

      entspricht,
      worin R² gleiche oder verschiedene, substituierte und/oder unsubstituierte, zweiwertige Koh lenwasserstoffreste mit 2 bis 40 Kohlenstoffatomen darstellt sowie n einen Wert von 2 bis 4 und m einen Wert von 30 bis 500 annehmen, und
   B einer Gruppe der allgemeinen Formel

      -CONH-R²-NHCONR³-R⁴-NR³- (III)

      und/oder der allgemeinen Formel

      -CONH-R²-NHCONR³-R⁴-O- (IV)

      entspricht,
      worin R² die oben angegebene Bedeutung hat, R³ unabhängig voneinander gleiche oder ver schiedene, substituierte und/oder unsubstituierte, einwertige Kohlenwasserstoffreste mit 1 bis 30 Kohlenstoffatomen und/oder Wasserstoff und R⁴ unabhängig voneinander gleiche oder verschiedene, substituierte und/oder unsubstituierte und/oder durch Heteroatome unterbrochene, zweiwertige Kohlenwasserstoffreste mit 2 bis 10 Kohlenstoffatomen dar stellen.

Wesentlich für die erfindungsgemäßen Entschäumerpulver ist die Verwendung mindestens einer Verbindung der allgemeinen Formel (I), wobei ein Gehalt von 1 bis 50 Gew.-Teilen, insbesondere von 5 bis 20 Gew.-Teilen je 100 Teile der verwendeten Entschäumerformulierung bevorzugt sind.

Üblicherweise sind die verwendeten Verbindungen der allgemeinen Formel (I) wasserlöslich oder wasserdispergierbar.

Bevorzugte Verbindungen der allgemeinen Formel (I) sind solche, bei denen b größer/gleich 1 ist bzw. diejenigen, bei denen a größer als b ist. Die Größe von a und b und damit die Anzahl der Gruppen A und B wird beispielsweise so gewählt, daß die Viskosität einer 2%-igen, wäßrigen Lösung 20 mm²/s bis 2000 mm²/s, vorzugsweise 50 bis 500 mm²/s, beträgt. Das Verhältnis von a zu b ist vorzugsweise größer 1, üblicherweise größer 5.

Beispielsweise können die Reste R¹ in der allgemeinen Formel (I) unabhängig voneinander gleiche oder verschiedene. kettenabbrechende Gruppen mit mindestens 8 Kohlenstoffatomen bedeuten, mit der Maßgabe, daß gleichzeitig in der Gruppe B mindestens ein Rest R³ ein substituierter und/oder unsubstituierter, einwertiger Kohlenwasserstoffrest mit mindestens 8 Kohlenstoffatomen ist.

Es ist auch möglich, Verbindungen einzusetzen, in denen die Gruppen A und B zufällig verteilte und/oder als Blöcke beispielsweise über Urethan- und/oder Harnstoffgruppen verknüpfte Einheiten darstellen, an denen der Rest R¹ über einen Sauerstoff gebunden ist.

Beispiele für Verbindungen, die bei der Synthese von Verbindung (I) Lieferant für die kettenabbrechende Reste R¹ sind, sind Alkohole, wie z. B. Laurylalkohol und Stearylalkohol, oder auch Monoisocyanate oder Epoxyverbindungen. Bei Verwendung der Letzteren trägt der Rest R¹ in alpha-Stellung zur Gruppe A oder B noch eine OH-Gruppe. Als kettenabbrechende Gruppen können weiterhin einseitig verschlossene Polyether, wie z. B. Polyoxyethylenether von Fettalkoholen oder Oxoalkoholen, verwendet werden. Es ist auch möglich, die Reste R¹ über Stickstoff, beispielsweise über sekundäre Amine an die Gruppen A oder B zu binden. Die Reste R² stammen vorzugsweise von Hexandiisocyanat-, Toluoldiisocyanat- oder Naphtalindii

socyanat-Gruppierungen. Vorzugsweise ist mindestens ein Rest R³ je Gruppe B ein substituierter oder unsubstituierter, einwertiger Kohlenwasserstoffrest mit mindestens 8 Kohlenstoffatomen, R⁴ kann Ethergruppierungen und/oder tertiäre Amingruppierungen in der Kohlenwasserstoffkette enthalten.

Beispiele für Verbindungen der allgemeinen Formel (I) sind polymere Umsetzungsprodukte von
- Toluoldiisocyanat mit Polyethylenglycol, Monoethanolamin und Stearylalkohol
- 1,6-Hexandiisocyanat mit Polyethylenglycol/Polypropylenglycolcopolymeren, Ethylendiamin und einem Gemisch aus C₁₂- bis C₁₆-Fettalkoholen
- 1,4-Butandiisocyanat mit Polyethylenglycol, N-Stearyl-1,6-Hexandiamin und Myristylalkohol.
- Naphtalindiisocyanat mit Polyethylenglycol und Stearylmonoisocyanat

Derartige und ähnliche Verbindungen, die im Rahmen der vorliegenden Erfindung eingesetzt werden können, sowie deren Synthese, sind bekannt (s. beispielsweise EP 127 950, EP 307 775). Verbindungen dieser Struktur finden z. B. als Verdicker in wasserbasierenden Farben und Lacken eine häufige Verwendung. Ebenfalls bekannt ist ihre Anwendung als Stabilisatoren in wäßrigen Siliconemulsionen (DE 44 21 500).

Als Entschäumerformulierungen (a) können dem Fachmann bekannte oder auch kommerziell erhältliche Entschäumer verwendet werden. Die geeigneten Entschäumer enthalten mindestens ein in Wasser unlösliches Entschäumeröl und mindestens einen Füllstoff Als Entschäumeröl können Mineralöle, Fette, Wachse, Fettalkohole, Fettsäureester, Siliconöle und andere bekannte wasserunlösliche Öle eingesetzt werden Als Füllstoffe sind hydrophobe feinverteilte Substanzen bevorzugt. Beispiele sind Polyurethanpulver, Fettsäureamide und hydrophobierte gefällte oder pyrogene Kieselsäuren.

Vorzugsweise werden als Entschäumerformulierung (a) Mischungen aus 85 bis 99 Gew.-% linearen und/oder verzweigten Organopolysiloxanen mit einer kinematischen Viskosität von 100 bis 1.000.000 mm²/s und 1 bis 15% mindestens einer vorbehandelten und/oder in situ hydrophobierten Kieselsäure mit einer BET Oberfläche größer 50 m²/g eingesetzt.

Als pulverförmiges Trägermaterial (b) können alle datur bekannten Stoffe verwendet werden, insbesondere wasserlösliche und/oder wasserdispergierbare, organische und/oder anorganische pulverförmige Substanzen, wie Mono-, Di- und/oder Polysaccharide und/oder Stärke und/oder Stärkederivate, Harnstoff, leichte Soda, cellulosehaltige Materialien, Holzmehl oder Alumosilikate.

Als weitere Komponenten können die erfindungsgemäßen Entschäumerpulver bekannte Zusätze, wie z. B. QM-Siliconharze, lineare oder cyclische Siloxane einer Viskosität von 0,65 bis zu mehreren Millionen mm²/s, polyethermodifizierte Polysiloxane, Fettalkohole, Fettsäureamide, Wachse, Aluminiumoxide, Aluminiumsilikate, Titanoxide, Kieselsäuren, Mineralöle, fette Öle, Fettsäuren, Tenside enthalten. Diese Zusätze können auch bereits in der verwendeten Entschäumerformulierung enthalten sein.

Die Verbindungen der allgemeinen Formel (I) können in Form einer wäßrigen Lösung oder wäßrige Dispersion eingesetzt werden. Üblicherweise werden dabei 20 bis 1000 Gew.-Teile Wasser pro 1 Gew.- Teil Verbindung (I) verwendet. Die Verbindungen der allgemeinen Formel (I) können ebenso in Form von Lösungen in Mischungen von Wasser mit Cosolventien, wie z. B. Diethylenglykolmonobutylether, oder Tensiden eingesetzt werden. Letztere Mischungen haben den Vorteil, Lösungen mit höheren Konzentrationen der Verbindungen der allgemeinen Formel (I) einsetzen zu können (Schaller, E.J. und Sperry, P.R. in Handbook of Coating Additives, Ed. L. Calbo, Verlag Marcel Dekker, 1987, S. 105 - 163). Das Wasser wird in jedem Fall nach Herstellung der Entschäumerpulver wieder quasi vollständig abgetrennt.

Die Herstellung der erfindungsgemäßen Entschäumerpulver kann beispielsweise dadurch erfolgen, daß Entschaumerformulierung und pulverförmiges Trägermaterial gemischt und anschließend oder gleichzeitig eine Lösung oder Dispersion einer Verbindung der allgemeinen Formel (I) und gegebenenfalls weitere Zusätze eingearbeitet werden. Es ist ebenfalls möglich, eine Emulsion oder Dispersion der Entschäumerformulierung in einer Lösung oder Dispersion einer Verbindung der allgemeinen Formel (I), gegebenenfalls mit weiteren Zusätzen, in an sich bekannter Weise herzustellen und in diese anschließend pulverförmiges Trägermaterial und gegebenenfalls weitere Zusätze einzuarbeiten. Die beim Mischen erhaltene pulverförmige Masse kann bei Bedarf noch getrocknet werden, so daß letztendlich ein rieselfähiges Pulver erhalten wird. Die Trocknung kann dabei sowohl unmittelbar im Mischer als auch nachfolgend in einem separaten Trockner bekannter Bauart, z.B. einem Bandtrockner, erfolgen.

Zur Herstellung der erfindungsgemäßen Entschäumerpulver werden verschiedene bekannte Mischer verwendet, die vorzugsweise heizbar und/oder evakuierbar sind, um die Trocknung im selben Aggregat zu ermöglichen. Beispiele für geeignete Mischer sind Pflugscharmischer, Z-Mischer, Schneckenextruder oder Planetenmischer, aber auch der Mini- & Maxi-Processor der Fa. Niro A/S. Der technologisch bedingte Restwassergehalt des erfindungsgemäßen Entschäumerpulvers liegt unterhalb 10 Gew.-%, vorzugsweise unterhalb 5 Gew.-%.

Eine weitere Variante zur Herstellung der erfindungsgemäßen Entschäumerpulver ist die Anwendung von bekannten Sprühtrocknungsverfahren. In einem solchen Verfahren wird z. B. eine Mischung der Entschäumerformulierung, einer Verbindung der allgemeinen Formel (I) und Wasser auf das Trägermaterial aufgesprüht und getrocknet.

Vorzugsweise finden die erfindungsgemäßen rieselfähigen Entschäumerpulver ihre Anwendung in Wasch- und Reinigungsmitteln. Sie können jedoch auch überall dort eingesetzt werden, wo Schaum bekämpft oder verhindert werden soll. Ein Beispiel dafür sind pulverförmige Pflanzenschutzmittel, insbesondere solche, die größere Mengen an oberflächenaktiven Verbindungen enthalten. Die erfindungsgemäßen Entschäumerpulver können aber z.B. auch in chemischen Prozessen oder der Abwasserbehandlung vorteilhaft eingesetzt werden.

Eine weitere Anwendung kann in Antiflatulenzpraparaten erfolgen, insbesondere in solchen, die zusätzlich Antacidika enthalten. Durch die Verwendung der erfindungsgemäßen Entschäumerpulver wird die sonst auftretende Desaktivierung des Entschäumers verhindert.

### Ausführungsbeispiele

### Polymerlösung 1

Als Verbindung der allgemeinen Formel (I) wurde ein lineares Polymer mit b > 0 verwendet, das ca. 2 Gew.-% hydrophobe Alkylreste an den Kettenenden und in den Einheiten B trägt und deren 2 gew.-%-ige wäßrige Lösung eine Viskosität von 150 mm²/s aufweist.

### Polymerlösung 2

Als Verbindung der allgemeinen Formel (I) wurde eine 2 gew.-%-ige waßrige Lösung eines Polymers der Formel R¹-(CH₂CH₂O)ₘ]-[CONH-R²-NHCO-[OCH₂CH₂]ₘ-O-]₃-R¹ eingesetzt, in welcher R¹ unabhängig voneinander gleiche oder verschiedene, kettenabbrechende Gruppen mit im Durchschnitt 16 Kohlenstoffatomen, die über Monoisocyanate an die Polyether gebunden sind, und R² zweiwertige Kohlenwasserstoffreste mit durchschnittlich 12 Kohlenstoffatomen bedeuten, a einen Wert um 3 sowie m durchschnittlich einen Wert zwischen 120 und 150 annehmen.

### Polymerlösung 3

Als Verbindung der allgemeinen Formel (I) wurde eine nichtionische Polvurethanverbindung eingesetzt, deren 2%-ige wäßrige Lösung eine Viskosität von ca. 700 mm²/s aufweist.

### Entschäumerformulierung A

100 Gew.-Teile des nichtflüchtigen Anteils des Hydrolyseproduktes von Dimethyldichlorsilan mit einer Viskosität kleiner 200 mm²/s bei 25 °C 20 Gew.-Teile eines trimethylsiloxyterminierten Polydiorganosiloxans mit einer Viskosität von 50 mm²/s bei 25 °C und 0,9 Gew.-Teile Tetraethylsilikat wurden in Gegenwart von 20 ppm KOH als Equilibrierungskatalysator bei einer Temperatur von 140°C umgesetzt. Nach Beendigung der Umsetzung und Abkühlen des erhaltenen Polydimethylsiloxans wurde mit 5 Gew.-Teilen einer hydrophobierten Fällungskieselsäure mit einer BET-Oberfläche von 90 m²/g gemischt. Die erhaltene Entschäumerformulierung wies eine Viskosität von 36000 mm²/s auf.

### Entschäumerformulierung B

88 Gew.-Teile Polydimethylsiloxan mit einer Viskosität von 350 mm²/s wurden mit 12 Gew.-Teilen einer hydrophobierten Fällungskieselsäure mit einer BET-Oberfläche von 90 m²/g vermischt. Die erhaltene Entschäumerformulierung wies eine Viskosität von 3700 mm²/s auf.

### Entschäumerformulierung C

Ein Entschäumer wurde durch Mischen von 90 Gew.-%Paraffinöl mit 8 Gew.-% einer hydrophobierten pyrogenen Kieselsäure und 2 Gew.-% Glycerolmonostearat bei 75°C hergestellt. Die Entschäumeiformulierung hatte eine Viskosität von 1600 mm²/s.

### Entschäumerformulierung D

930 Gew.-Teile eines Polydimethylsiloxans einer Viskosität von 1000 mm²/s wurden mit 20 Gew.-Teilen einer feinverteilten Kieselsäure einer BET-Oberfläche von 200 m²/g und 5 Gew.-Teilen des nichtflüchtigen Anteils des Hydrolyseprodukts von Dimethyldichlorsilan mit einer Viskosität von 50 mm²/s bei 25 °C gemischt und für 3 Stunden auf 130 °C erhitzt. Nach dem Abkühlen dieser Mischung wurden 45 Gew.-Teile einer hydrophobierten Fällungskieselsäure mit einer BET-Oberfläche von 90 m²/g zugemischt.
Die erhaltene Entschäumerformulierung wies eine Viskosität von 2900 mm²/s auf.

### Beispiel A1

50 ml der Polymerlösung 1 wurden in einem Becherglas vorgelegt und unter intensivem Mischen mit einem Flügelrührer wurden 10 g der Entschäumerformulierung A langsam zugegeben, so daß nach 10 Minuten Rühren eine Emulsion der Entschäumerformulierung in der Polymerlösung vorlag. Unter fortgesetztem Rühren wurden zu dieser Emulsion 88.5 g Harnstoff gegeben und anschließend das Wasser unter fortgesetztem Mischen unter Vakuum entfernt. Danach wurden 0.5 g einer hydrophilen Kieselsäure mit einer BET-Oberfläche von 200 m²/g zugemischt. Es wurde ein weißes, rieselfähiges Pulver erhalten.

### Beispiel A2

8.7 g eines geprillten Harnstoffs einer Schüttdichte von ca. 700 kg/m³ wurden vorgelegt und 1 g der Entschäumerformulierung B darin verteilt. Zu dieser Mischung wurde mit 5 ml der Polymerlösung 1 gemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein weißes, rieselfähiges Pulver erhalten.

### Beispiel A3

8,8 g leichte kalzinierte Soda wurden mit 3,5 ml der Polymerlösung 1 gemischt, überschüssiges Wasser unter Vakuum entfernt und danach in einem Becherglas 1 g der Entschäumerformulierung B intensiv eingemischt. Nachfolgend wurden zweimal je 2 ml der Polymerlösung 1 zugemischt und anschließend überschüssiges Wasser unter fortgesetztem Mischen unter Vakuum entfernt. Danach wurden 0,05 g einer hydrophilen Kieselsäure mit einer BET-Oberfläche von 200 m²/g zugemischt. Es wurde ein weißes Pulver erhalten.

### Beispiel A4

8,8 g leichte kalzinierte Soda wurden vorgelegt und 1 g der Entschäumerformulierung B darin verteilt. Nachfolgend wurden 5 ml der Polymerlösung 1 zugemischt und anschließend überschüssiges Wasser unter fortgesetztem Mischen unter Vakuum entfernt. Danach wurden 0,1 g einer hydrophilen Kieselsäure mit einer BET-Oberfläche von 200 m²/g zugemischt. Es wurde ein weißes, rieselfähiges Pulver erhalten.

### Beispiel A5

8.7 g kristalline Soda wurden vorgelegt und 1 g der Entschäumerformulierung B verteilt. Nachfolgend wurden 5 ml der Polymerlösung 1 zugemischt und anschließend überschüssiges Wasser unter fortgesetztem Mischen unter Vakuum entfernt. Danach wurden 0,1 g einer hydrophilen Kieselsäure mit einer BET-Oberfläche von 200 m²/g zugemischt.
Es wurde ein weißes, rieselfähiges Pulver erhalten.

### Beispiel A6

8,8 g Saccharose wurden mit 3 g der Entschäumerformulierung C gründlich gemischt. Nachfolgend wurden 5 ml der Polymerlösung 1 zugemischt und anschließend überschüssiges Wasser unter fortgesetztem Mischen unter Vakuum entfernt. Danach wurden 0,1 g einer hydrophilen Kieselsäure mit einer BET-Oberfläche von 200 m²/g zugemischt.
Es wurde ein weißes, rieselfähiges Pulver erhalten.

### Beispiel A7

Aus 50 ml der Polymerlösung 1 und 10 g der Entschäumerformulierung A wurde wie im Beispiel A1 beschrieben eine Emulsion der Entschäumerformulierung hergestellt. Unter fortgesetztem Rühren wurden zu dieser Emulsion 88,5 g Saccharose gegeben und anschließend überschüssiges Wasser unter fortgesetztem Mischen unter Vakuum entfernt. Danach wurden 0,5 g einer hydrophilen Kieselsäure mit einer BET-Oberfläche von 200 m²/g zugemischt.
Es wurde ein weißes, rieselfähiges Pulver erhalten.

### Beispiel A8

8,7 g Saccharose wurden mit 2 g der Entschäumerformulierung D gründlich gemischt. Nachfolgend wurden 2.5 ml der Polymerlösung 1 zugemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein weißes, rieselfähiges Pulver erhalten.

### Beispiel A9

8,7 g einer fein granulierten technischen Natrium-Carboxymethylcellulose, dadurch charakterisiert, daß eine Lösung von 5% dieser Natrium-Carboxymethylcellulose in Wasser bei 20 °C eine Viskosität von 1500 mm²/s aufwies, wurden mit 1 g der Entschäumerformulierung B gründlich gemischt. Nachfolgend würden 5 ml der Polymerlösung 1 zugemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein rieselfähiges Pulver erhalten.

### Beispiel A10

43,5 g Methylhydroxyethylcellulose, dadurch charakterisiert, daß eine Lösung von 2% dieser Methylhydroxyethylcellulose in Wasser bei 20 °C eine Viskosität von 50 mm²/s aufwies, wurden mit 5 g der Entschäumerformulierung B innerhalb von 30 Minuten gemischt. Nachfolgend wurden 25 ml der Polymerlösung 1 zugemischt und anschließend überschüssiges Wasser unter fortgesetztem Mischen unter Vakuum entfernt. Danach wurde 1 g einer hydrophilen Kieselsäure mit einer BET-Oberfläche von 200 m²/g zugemischt.
Es wurde ein rieselfähiges Pulver erhalten.

### Beispiel A11

88,5 g Hydroxyethylcellulose, dadurch charakterisiert, daß eine Lösung von 5% dieser Hydroryethylcellulose in Wasser bei 20 °C eine Viskosität von 100 bis 180 mm²/s aufwies, wurden mit 10 g der Entschäumerformulierung A innerhalb von 30 Minuten gemischt. Nachfolgend wurden 50 ml der Polymerlösung 1 zugemischt und anschließend überschüssiges Wasser unter fortgesetztem Mischen unter Vakuum entfernt. Danach wurden 0,5 g einer hydrophilen Kieselsäure mit einer BET-Oberfläche von 200 m²/g zugemischt.
Es wurde ein rieselfählges Pulver erhalten.

### Beispiel A12

88.5 g Methylhydroxypropylcellulose, dadurch charakterisiert, daß eine Lösung von 5% dieser Hydroxyethylcellulose in Wasser bei 20 °C eine Viskosität von 50 mm²/s aufwies, wurden mit 10 g der Entschäumerformulierung A innerhalb von 30 Minuten gemischt. Nachfolgend wurden 50 ml der Polymerlösung 1 zugemischt und anschließend überschüssiges Wasser unter fortgesetztem Mischen unter Vakuum entfernt. Danach wurden 0,5 g einer hydrophilen Kieselsäure mit einer BET-Oberfläche von 200 m²/g zugemischt.
Es wurde ein rieselfähiges Pulver erhalten.

### Beispiel A13

8,7 g eines pulverförmigen Terephthalsäure-Ethylenoxid-Copolymers wurden mit 1 g der Entschäumerformulierung B gründlich gemischt. Nachfolgend wurden in 5 aufeinanderfolgenden Teilschritten je 1 ml der Polymerlösung 1 zugemischt und anschließend überschüssiges Wasser unter fortgesetztem Mischen unter Vakuum entfernt. Nach der letzten Zugabe von Polymerlösung und nach Entfernung des überschüssigen Wassers wurden 0,2 g einer hydrophilen Kieselsäure mit einer BET-Oberfläche von 200 m²/g zugemischt.
Es wurde ein weißes, rieselfähiges Pulver erhalten.

### Beispiel A14

8,7 g Saccharose wurden vorgelegt und 1 g der Entschäumerformulierung B gründlich darin verteilt. Nachfolgend wurden 5 ml der Polymerlösung 2 zugemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein weißes, rieselfähiges Pulver erhalten.

### Beispiel A15

8,7 g Saccharose wurden vorgelegt und 1 g der Entschäumerformulierung B gründlich darin verteilt. Nachfolgend wurden 5 ml der Polymerlösung 3 zugemischt und anschließend überschüssiges Wasser unter fortgesetztem Mischen unter Vakuum entfernt. Danach wurden 0,2 g einer hydrophilen Kieselsäure mit einer BET-Oberfläche von 200 m²/g zugemischt.
Es wurde ein weißes, rieselfähiges Pulver erhalten.

### Vergleichsbeispiele

### Vergleichsbeispiel V1

8,5 g kristallines Natriumsulfat wurden mit 1.5 g der Entschäumerformulierung B gründlich gemischt.
Es wurde ein weißes, leicht klebriges Pulver erhalten.

### Vergleichsbeispiel V2

8,5 g Saccharose wurden mit 1,5 g der Entschäumerformulierung B gründlich gemischt. Es wurde ein weißes, leicht klebriges Pulver erhalten.

### Vergleichsbeispiel V3

8,5 g Saccharose wurden mit 1 g der Entschäumerformulierung B gründlich gemischt. Nachfolgend wurden 0,7 ml einer wäßrigen 42 gew.-%-igen Lösung eines Acrylsäure-Maleinsäure-Copolymers mit einem Molgewicht von ca. 30000 g/mol zugemischt und anschließend überschüssiges Wasser unter fortgesetztem Mischen unter Vakuum entfernt. Nach Entfernung des überschüssigen Wassers wurden 0,2 g einer hydrophilen Kieselsäure mit einer BET-Oberfläche von 200 m²/g zugemischt.
Es wurde ein weißes, rieselfähiges Pulver erhalten.

### Prüfung der Entschäumer als Waschpulverzusatz

Die erhaltenen Entschäumerpulver wurden in ein handelsübliches, aber entschäumerfreies Waschpulver eingebracht und vermischt, so daß das Waschpulver einen Aktivgehalt von 0,2 Gew.-%der Entschäumerformulierung A bzw. 0,6 Gew.-% der Entschäumerformulierung B enthielt.
Die Prüfüng der Entschäumer erfolgte sofort nach Herstellung und nach 90 Tagen Lagerung bei Raumtemperatur.

### Test A

4 g des entschäumerhaltigen Waschpulvers wurden in 400 ml entionisiertem Wasser gelöst und in einem Becherglas aufeiner Heizplatte 30 min bei 600 min⁻¹ mit einem Käfigrührer gerührt. Dabei stieg die Temperatur von 25°C auf 60°C an. Die Höhe des gebildeten Schaums wurde mit einem Schaumhöhenmeßgerät der Fa. Datentechnik Ing. Franz Raab in Intervallen von 10 Sekunden gemessen. Aus den Meßwerten wurde vom Gerät ein Schaumhöhenintegral, H_{E}, über die Gesamtzeit errechnet, das die Menge des während des Tests gebildeten Schaums widerspiegelt.

Der Grad der Entschäumung, der ein Maß für die Wirksamkeit des Entschäumers darstellt, wird wie folgt berechnet:

E (in%) = (H_{A}-H_{E})/H_{A}*100

Dabei bedeutet H_{A} das Schaumhöhenintegral, das bei einem Vergleichsversuch mit dem Waschpulver ohne Entschäumer ermittelt wurde.

Tabelle 1 enthält den Grad der Entschäumung für die eingesetzten Entschäumerpulver.

**Tabelle 1**

| Beispiel | Entschäumung in % sofort nach Herstellung | Entschäumung in % nach 90 Tagen Lagerung |
|---|---|---|
| A1 | 84 | 82 |
| A2 | 81 | 92 |
| A3 | 84 | 95 |
| A4 | 93 | 81 |
| A5 | 72 | 65 |
| A6 | 92 | 78 |
| A7 | 83 | 71 |
| A8 | 85 | 56 |
| A9 | 92 | 92 |
| A10 | 89 | 74 |
| A11 | 96 | 78 |
| A12 | 88 | 68 |
| A13 | 88 | 67 |
| A14 | 88 | 92 |
| A15 | 94 | 88 |
| V1 | 44 | 0 |
| V2 | 87 | 3 |
| V3 | 93 | 41 |

Die Überlegenheit der erfindungsgemäßen Entschäumerpulver ist offensichtlich.

### Test B

Einige der erhaltenen Entschäumerpulver wurden in ein handelsübliches, aber entschäumerfreies Waschpulver eingebracht und gemischt, so daß das Waschpulver einen Aktivgehalt von 0,1 Gew.-% der Entschäumerformulierung A enthielt.
70 g des so erhaltenen Waschpulvers wurden zur Testung in eine automatische Frontlader-Waschmaschine (Miele WS 5425 MC 13, 60 °C Waschgang mit 1 kg Trockenwäsche) gegeben und die Schaumhöhen zu ausgewählten Zeiten nach Programmstart gemessen. Zur Messung wurde die Türhöhe in 10 gleiche Inkremente eingeteilt. Dabei bedeutet "0" kein Schaum und "10" die vollständige Füllung der Maschine mit Schaum. Zum Vergleich wurde ebenfalls eine Messung der Schaumhöhen ohne Entschäumerzusatz durchgeführt. Die Ergebnisse sind in Tabelle 2 dargestellt.

**Tabelle 2**

| Beispiel | 14 Minuten | 16 Minuten | 18 Minuten | 30 Minuten |
|---|---|---|---|---|
| ohne | 9 | 9,5 | 8,0 | 7,5 |
| A 1 | 0 | 0,5 | 1,0 | 1,5 |
| A 11 | 0 | 0 | 0,5 | 0,5 |
| A 12 | 0.5 | 1 | 1 | 2,0 |

Die Wirksamkeit der erfindungsgemäßen Entschäumerpulver ist offensichtlich.

## Patentansprüche

1. Entschäumerpulver, enthaltend
(a) 100 Gew.-Teile einer Entschäumerformulierung, bestehend aus mindestens einem in Wasser unlöslichem Entschäumeröl und mindestens einem Füllstoff,
(b) 50 bis 5000 Gew.-Teile mindestens eines pulverförmigem Trägermaterials sowie
(c) 1 bis 150 Gew.-Teile mindestens einer Verbindung der allgemeinen Formel
R¹-Aₐ-B_{b}-R¹ (I)
, worin R¹ unabhängig voneinander gleiche oder verschiedene, kettenabbrechende Gruppen mit 1 bis 30 Kohlenstoffatomen bedeutet und a größer/gleich 1 ist und b größer/gleich 0 ist, wobei R¹ direkt und/oder über Polyalkylenglycolketten an A und/oder B gebunden ist,
A einer Gruppe der allgemeinen Formel
-CONH-R₂-NHCO-[OCₙH₂ₙ]ₘ-O- (II)
entspricht,
worin R² gleiche oder verschiedene, substituierte und/oder unsubstituierte, zweiwertige Koh lenwasserstoffreste mit 2 bis 40 Kohlenstoffatomen darstellt sowie n einen Wert von 2 bis 4 und m einen Wert von 30 bis 500 annehmen, und
B einer Gruppe der allgemeinen Formel
-CONH-R²-NHCONR³-R⁴-NR3- (III)
und/oder der allgemeinen Formel
-CONH-R²-NHCONR³-R⁴-O- (IV)
entspricht,
worin R² die oben angegebene Bedeutung hat, R³ unabhängig voneinander gleiche oder ver schiedene, substituierte und/oder unsubstituierte, einwertige Kohlenwasserstoffreste mit 1 bis 30 Kohlenstoffatomen und/oder Wasserstoff und R⁴ unabhängig voneinander gleiche oder verschiedene, substituierte und/oder unsubstituierte und/oder durch Heteroatome unterbro chene, zweiwertige Kohlenwasserstoffreste mit 2 bis 10 Kohlenstoffatomen darstellen.

2. Entschäumerpulver nach Anspruch 1, dadurch gekennzeichnet, daß in der allgemeinen Formel (I) b größer/gleich 1 ist.

3. Entschäumerpulver nach Anspruch 2, dadurch gekennzeichnet, daß in der allgemeinen Formel (I) R¹ unabhängig voneinander gleiche oder verschiedene, kettenabbrechende Gruppen mit mindestens 8 Kohlenstoffatomen bedeutet, mit der Maßgabe, daß gleichzeitig in der Gruppe B mindestens ein Rest R³ ein substituierter und/oder unsubstituierter, einwertiger Kohlenwasserstoffrest mit mindestens 8 Kohlenstoffatomen ist.

4. Entschäumerpulver nach Anspruch 2, dadurch gekennzeichnet, daß in der allgemeinen Formel (I) die Gruppen A und B zufällig verteilte und/oder als Blöcke verknüpfte Einheiten darstellen.

5. Entschäumerpulver nach Anspruch 2, dadurch gekennzeichnet, daß in der allgemeinen Formel (IV) der Rest R⁴ Ethergruppierungen und/oder tertiäre Amingruppierungen in der Kohlenwasserstoftkette enthält.

6. Entschäumerpulver nach Anspruch 1, dadurch gekennzeichnet, daß in der allgemeinen Formel (I) a größer als b ist.

7. Entschäumerpulver nach Anspruch 1, dadurch gekennzeichnet, daß 5 bis 20 Teile der Verbindung der allgemeinen Formel (I) je 100 Teile Entschäumerformulierung enthalten sind.

8. Entschäumerpulver nach Anspruch 1, dadurch gekennzeichnet, daß als Entschäumerformulierung (a) eine Mischung aus 85 bis 99 Gew.-% linearen und/oder verzweigten Organopolysiloxanen mit einer kinematischen Viskosität von 100 bis 1.000.000 mm²/s und 1 bis 15 Gew.-% einer vorbehandelten und/oder in situ hydrophobierten Kieselsäure mit einer BET Oberfläche größer 50 m²/g verwendet wird.

9. Entschäumerpulver nach Anspruch 1, dadurch gekennzeichnet, daß als Trägermaterial (b) wasserlösliche und/oder wasserdispergierbare, organische und/oder anorganische pulverförmige Substanzen verwendet werden.

10. Entschäumerpulver nach Anspruch 9, dadurch gekennzeichnet, daß als Trägermaterial (b) Mono-, Di- und/oder Polysaccharide und/oder deren Derivate verwendet werden.

11. Entschäumerpulver nach Anspruch 9, dadurch gekennzeichnet daß als Trägermaterial (b) Harnstoff verwendet wird.

12. Entschäumerpulver nach Anspruch 9, dadurch gekennzeichnet, daß als Trägermaterial (b) leichte Soda verwendet wird.

13. Verwendung der Entschäumerpulver nach Anspruch 1, in Wasch- und Reinigungsmitteln.

14. Verwendung der Entschäumerpulver nach Anspruch 1, in agrochemischen Erzeugnissen.
